(19) Europäisches Patentamt

European Patent Office

Office européen des brevets

(11) **EP 1 152 994 B1**

(12) **EUROPEAN PATENT SPECIFICATION**

(45) Date of publication and mention
of the grant of the patent:
**26.03.2003   Bulletin 2003/13**

(21) Application number: **99959250.4**

(22) Date of filing: **13.12.1999**

(51) Int Cl.[7]: **C04B 14/10**

(86) International application number:
**PCT/DK99/00697**

(87) International publication number:
**WO 00/035824 (22.06.2000 Gazette 2000/25)**

(54) **CONCRETE CONTAINING SUPERPLASTICISER AND PALYGORSKITE**

Superplastifizierende Hilfstoffe und Palygorskit enthaltender Beton

BETON RENFERMANT UN SUPERPLASTIFIANT ET UNE PALYGORSKITE

(84) Designated Contracting States:
**AT BE CH CY DE DK ES FI FR GB GR IE IT LI LU MC NL PT SE**

(30) Priority: **14.12.1998  DK 98016**

(43) Date of publication of application:
**14.11.2001   Bulletin 2001/46**

(73) Proprietors:
- **DANSK BETON TEKNIK A/S**
  **DK-2900 Hellerup (DK)**
- **Danmarks og Gronlands Geologiske Undersogelser GEUS**
  **2400 Kobenhaven NV (DK)**
- **Intron B.V.**
  **6130 PD Sittard (NL)**
- **HOLLANDSCHE BETON GROEP N.V.**
  **2285 TA Rijswijk (NL)**
- **English China Clay International Ltd.**
  **St. Austell, Cornwall PL25 4DJ (GB)**

(72) Inventor: **HENRICHSEN, Anders**
**DK-2900 Hellerup (DK)**

(74) Representative: **Pedersen, Tenna Marian et al**
**Zacco Denmark A/S**
**Hans Bekkevolds Allé 7**
**2900 Hellerup (DK)**

(56) References cited:
**US-A- 4 861 378**

- **DATABASE WPI Week 198907, Derwent Publications Ltd., London, GB; AN 1989-051918, XP002947499 & JP 64 003 040 A (DENKI KAGAKU KOGYO KK) 06 January 1989 & PATENT ABSTRACTS OF JAPAN & JP 64 003 040 A (DENKI KAGAKU KOGYO KK) 06 January 1989**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

*Scope of invention*

Production of concrete, including concrete structures characterised by High Performance, e.g. enhanced service lifetime, high strength, high resistance towards environmental exposure.

**BACKGROUND**

In modern High Strength/High Performance Concretes a number of deficiencies have been recorded. The main defects may be characterised as follows:

- Bonding defects at coarse aggregate and reinforcement mainly evolved as highly porous zones of varying thickness.
- Uneven homogeneity of the cement paste, i.e. varied porosity.
- Cracks, both macroscopic, e.g. from exposed surfaces and microscopic, e.g. bundles of plastic cracks internally in the concrete volume.
- Uneven distribution of coarse aggregate
- Poor quality of the air void structure mainly characterised by low specific surface and high spacing factor.
- Lack of hydration of cement locally in the cement paste.

These defects are caused by a variety of conditions in both the fresh and the hardening concrete.

It is the theory of the applicants that a majority of the deficiencies may be related to instability of modern concretes on micro- as well as macro level in combination with the commonly applied vibration technique. This is the reason why the concrete material and the concept which are the subject of the present patent claims were developed with the objective of obtaining a high degree of stability to avoid such degradation in combination with rheological properties which will lead to a self-levelling and self-compacting behaviour. The innovative concrete composition shall be characterised by a high viscosity and low yield strength. This is achieved a.o. by addition of 2-10% palygorskite in combination with addition of superplasticising chemical additives.

A number of other patents describe the use of palygorskite in concrete but the application differs from the use in our invention on the following points:

The Japanese patent JP 7277795 by Denki Kagaku Kogoy KK describes the addition of 0.25 - 5% (of the cement wt.) of water-reducing additives in combination with 0.1 -15% of an inorganic material such as bentonite, phlogopite, zeolite, carbon, coke or attapulgite in order to eliminate viscosity, reduce slump and enhance strength in concrete. This deviates from our invention by referring to a broad group of inorganic materials including attapulgite (palygorskite) whereas in our invention, only the particle shape of the palygorskite is considered of importance and whereas we prescribe the use of a superplasticising additive as a prerogative for the predicted behaviour. Further, the invention claims that the use of inorganic materials aims at eliminating viscosity, whereas our invention has the objective of increasing the viscosity without increase in the yield strength.

The Japanese patent JP 7053248 from Denki Kagaku Kogyo KK describes an addition of 0.25 - 0.5% of water-reducing additives in combination with 0.1 - 15% of an inorganic material from a group consisting of bentonite, phlogopite, graphite, talc, zeolite, boron nitride, activated carbon, coal cinders, diatomaceous earth, perlite and attapulgite with the aim of reducing viscosity and prevent drying-out shrinkage in the plastic concrete, whereas in our invention only the particle shape of attapulgite in combination with superplasticiser is claimed to result in the desired properties.

The present invention does, further, aim at increasing and not reducing the viscosity.

The Japanese patent JP 6144909 from Ohbayashi Corp. refer to application of fibrous clay minerals such as sepiolite, attapulgite and palygorsktie in combination with a cellulosic segregation reducing agent such as methyl cellulose with the aim of improving the stability of concrete. This patent deviates from our invention by using palygorskite together with and as part substitution for cellulose fibres and by using these materials without a superplasticiser. Further, the purpose is production of aerial concretes.

The Japanese patent JP 5238800 from Ohbayashi Corp. applies palygorskite or sepiolite in a cement mortar to improve the strength, whereas the use of palygorskite in our invention serves a rheological purpose. Further, the use of superplasticiser is not prescribed in the Japanese patent.

The Japanese patent JP 64003040 from Denki Kogoyo KK describes the addition of inorganic matter selected from bentonite, phlogopite, brimstone, zeolite, activated carbon, coal cinders and attapulgite with a high-performance water-reducing agent such as polyalkylsulfonate. The aim of this patent is to improve the handling properties of concrete and to improve strength. This deviates from our invention by reference to a broad group of inorganic materials incl.

palygorskite, whereas our invention only mentions palygorskite and prescribes the use of these materials in combination with a superplasticiser which is necessary to achieve the desired effect.

The Japanese patent JP 920293048 from Ohbayashi Corp. refers to use of fibrous clay minerals together with cellulose polymers in order to improve the stability of concrete. This deviates from our invention by the use of palygorskite together with cellulose fibres (polymers) and by not prescribing the use of superplasticisers. Further, the patent does not claim the objective of producing self-levelling vibration-free concrete.

The Japanese patent JP 900058967 from Tokyo Kensetsu KK describes the use of sepiolite and palygorskite in order to improve the segregation resistance of a roller compacted concrete. Our invention does not address the RCC concept and the Japanese invention does not mention the use of palygorskite in combination with superplasticiser, which is not a common ingredient in RCC.

The Japanese patent JP 840094587 from Nisso Master Builders KK prescribe the use of sepiolite or attapulgite in combination with conventional plasticisers to obtain improved workability. This deviates from our invention by use of palygorskite to improve workability of ordinary plasticised concretes and not with the objective of controlling superplasticised, self-levelling concretes.

The Japanese patent 60255654 from Nisso Master Builders KK prescribes the use of crushed sepiolite mineral in combination with a fluidising agent in the fluidisation of concrete. 'Pref. Sepiolite mineral is aggregate of magnesium silicate needle crystals such as attapulgite or sepiolite, etc.'

Basically, sepiolite and palygorskite (often called attapulgite) both belong to the layer silicates of inverted ribbons, group sepiolite-palygorskite, but sepiolite belongs to the trioctahedral subgroup and palygorskite to the dioctahedral subgroup. (1). Sepiolite has the ideal formula $Mg_8Si_{12}(OH_2)_4(H_2O)_4$, while palygorskite has the ideal formula $Al_4Si_8$ $(OH_2)_4(OH)_2(H_2O)_4(2)$ and has, thus, 4Al octahedral cations while sepiolite has 8Mg octahedral cations. In fact, dioctahedral layer silicates contain typically Al and trioctahedral Mg, because of the larger size of the Mg cation compared to Al. The two minerals are, thus, clearly different, and sepiolite is the Mg-containing one. Palygorskite is predominantly needle-shaped and sepiolite most often ribbon shaped. Since palygorskite is not a (trioctahedral) magnesium silicate but instead a (dioctahedral) aluminium silicate, the patent 60255654 does not refer to the mineral palygorskite and is, thus, not in conflict with the present patent application.

Whereas we do recognise that self-levelling or self-compacting concretes at present may be considered known technology, we do also maintain that these concretes are never produced by use of the combination palygorskite/superplasticiser and, further, that the concept of self-levelling or self-compacting concrete was first mentioned in the literature in Japan 1986 (3). Consequently, none of the mentioned patents can address this topic, which was unknown at the time of the patent.

State-of-the-art concretes in this field apply elongated polymers as e.g. polysaccharides instead of palygorskite. One commonly used product is 'Velan gum' from the company Monsanto Ltd.

The cost of this product is a magnitude higher than the predicted market price of palygorskite.

Further, of an inorganic product like palygorskite can be added during production of a cement having rheology controlling properties.

This technique is unknown today, though it offers large advantages.

Both above mentioned records underline the innovative aspects of the present invention.

We have not found any patents which claim the use of a combination of palygorskite and superplasticiser to produce self-levelling and self-compacting concretes by means of controlling (maximising) the viscosity/yield strength ratio.

The decisive part of our invention is exactly these properties and the related property 'filling capacity'. This invention will cause that the previously used method of vibration to consolidate the concrete may be redundant and the deficiencies as described under 'background' may be prevented.

The invention is, thus, innovative and not in conflict with any known patent even though the use of palygorskite as illustrated above is not unknown.

*REFERENCES*

(1) Bailey, S.W. (1984) Structures of layer silicates (pages 5 and 104-115). In Crystal Structures of Clay Minerals and their X-ray Identification (edited by G.W. Briendley and G. Brown). Mineralogical Society, London.

(2) Drits, V.A. and Sokolova, G.V. (1971) Structure of palygorskite. Soviet Phys. Crystallogr. vol. 16, p. 183-185.

(3) Skarendahl, A (1999) CBI Nytt, no 2, July 1999

## SPECIFICATION

The invention deals with production of self-levelling, self-compacting concrete, characterised by a high filling capacity and good stability of the cementitious microstructure achieved by adding 2-10% palygorskite measured as % by weight of the total dry binder. Particularly, the concrete is characterised by a high micro stability when exposed to high pumping pressures (100 - 200 bar), high segregation resistance and a high ratio between viscosity and yield strength of the fresh concrete.

The concrete is, further, characterised by the following properties.

- flow properties are obtained by composition of the aggregates for easy flow and by use of superplasticisers to such an extent that the concrete without palygorskite addition would reach a slump exceeding 150 mm.
- flow properties in relation to confined casting space because of dimensional reductions, reinforcement etc. are significantly improved by addition of palygorskite, which decrease the slump without affecting the yield strength.
- the paste content in the concrete is in the range 25-40% of the concrete volume.
- the cement paste expose clear thixotropic behaviour.
- even concrete with porous, lightweight aggregates may be pumped at usual pumping pressures (<150 bar).
- the cement paste (the binder) is usually composed of at least three solid components in addition to palygorskite, e.g. Portland Cement, microsilica and an industrial or natural pozzolanic powder.
- the palygorskite is characterised by an aspect ratio (length/diameter ratio) >35.

Several tests have demonstrated that concrete produced in accordance with this invention expose a stable (high) plastic viscosity tolerating even some variation in the water content and that the rheology of the concrete - particularly the internal and external segregation tendencies - is not effected by minor variations in the water content. Consequently, the concrete could be characterised as tolerant towards variations in the water content.

Three full-scale demonstrations have proven that properties like e.g. permeability, strength and adhesion to the reinforcement were very satisfying and that the concrete was stable during production and of a general high quality. The full-scale structures did not expose any of the deficiencies which were described in the section 'background' and the concrete filled the structure completely.

EXAMPLES OF COMPOSITIONS

| Example no. 1 | |
|---|---|
| Cement, CEM I 32.5, supplier EBCI, NL | 300 kg/m$^3$ |
| Microsilica, Supplier Elkem, N | 5 kg/m$^3$ |
| Palygorskite, trade name Attapulgite, supplier Tolsa, E | 16,5 kg/m$^3$ |
| Metakaolin, English China Clay, ND 500, GB | 16,5 kg/m$^3$ |
| Water (total free water) | 181 kg/m$^3$ |
| Peramin FS, superplasticiser, supplier Perstorp, SE | 8,3 kg/m$^3$ |
| Air entrainer, Perstorp, SE | 2,0 kg/m$^3$ |
| Sand 0-4 mm | 568 kg/m$^3$ |
| River gravel 4-8 mm | 366 kg/m$^3$ |
| River gravel 8-16 mm | 476 kg/m$^3$ |
| River gravel 16-32 mm | 421 kg/m$^3$ |
| In total | 2,360 kg/m$^3$ |

| Example no. 2 | |
|---|---|
| Cement, CEM III. Supplier CEMIJ, NL | 314 kg/m$^3$ |
| Palygorskite, trade name Attapulgite, supplier Tolsa, E | 16,5 kg/m$^3$ |
| Water (total free water) | 181 kg/m$^3$ |
| Melment L4004, superplasticiser, Nordisk Byggekemi, DK | 8,3 kg/m$^3$ |

(continued)

| Example no. 2 | |
|---|---|
| Air entrainer, Amex SB, Nordisk Byggekemi, DK | 2,0 kg/m$^3$ |
| Sand 0-4 mm | 562 kg/m$^3$ |
| River gravel 4-8 mm | 362 kg/m$^3$ |
| River gravel 8-16 mm | 476 kg/m$^3$ |
| River gravel 16-32 mm | 417 kg/m$^3$ |
| | |
| In total | 2,334 kg/m$^3$ |

| Example no. 3 | |
|---|---|
| Cement, CEM I 42.5, supplier Aalborg Portland, DK | 260 kg/m$^3$ |
| Microsilica, Supplier Elkem, N | 26 kg/m$^3$ |
| Palygorskite, trade name Attapulgite, supplier Tolsa, E | 14 kg/m$^3$ |
| Metakaolin, English China Clay, ND 500, GB | 32 kg/m$^3$ |
| Water (total free water) | 151 kg/m$^3$ |
| Peramin FS, superplasticiser, supplier Perstorp, SE | 10 kg/m$^3$ |
| Peramin V, water reducing agent, supplier Perstorp, SE | 1 kg/m$^3$ |
| Peramin L, Air entrainer, supplier Perstorp, SE | 0,5 kg/m$^3$ |
| Sand 0-2 mm | 725 kg/m$^3$ |
| Crushed granite 5-8 mm | 180 kg/m$^3$ |
| Crushed granite 8-16 mm | 400 kg/m$^3$ |
| Crushed granite 16-32 mm | 530 kg/m$^3$ |
| | |
| In total | 2,330 kg/m$^3$ |

| Example no. 4 | |
|---|---|
| Cement, CEM I 42.5, supplier Aalborg Portland, DK | 350 kg/m$^3$ |
| Palygorskite, trade name Attapulgite, supplier Tolsa, E | 13 kg/m$^3$ |
| Metakaolin, English China Clay, ND 500, GB | 30 kg/m$^3$ |
| Water (total free water) | 170 kg/m$^3$ |
| Rheobuild 5000, superplasticiser, Master Builders, DK | 11 kg/m$^3$ |
| Peramin L, Air entrainer, supplier Perstorp, SE | 0,5 kg/m$^3$ |
| Sand 0-4 mm | 620 kg/m$^3$ |
| Crushed granite 5-8 mm | 235 kg/m$^3$ |
| Crushed granite 8-16 mm | 400 kg/m$^3$ |
| Crushed granite 16-32 mm | 530 kg/m$^3$ |
| | |
| In total | 2,360 kg/m$^3$ |

| Example no. 5 | |
|---|---|
| Cement, CEM II 52.5, supplier Aalborg Portland, DK | 200 kg/m$^3$ |
| Palygorskite, trade name Attapulgite, supplier Tolsa, E | 10 kg/m$^3$ |
| GGBFS, Blaine 420, CEMIJ, NL | 150 kg/m$^3$ |
| Microsilica, Elkem, N | 10 kg/m$^3$ |
| Water (total free water) | 150 kg/m$^3$ |

(continued)

| Example no. 5 | |
|---|---|
| Glenium[1]), Superplast, Master Builders, DK | 3 kg/m$^3$ |
| Sand 0-2 mm | 600 kg/m$^3$ |
| Crushed granite 4-8 mm | 240 kg/m$^3$ |
| Crushed granite 8-16 mm | 400 kg/m$^3$ |
| Crushed granite 16-25 mm | 600 kg/m$^3$ |
| In total | 2,360 kg/m$^3$ |

[1]) New generation of superplasticising chemical admixture

## Claims

1. Self-levelling, self-compacting concrete produced on the basis of Portland Cement and/or other hydraulic binders such as pozzolans with addition of water and aggregate **characterised by** a content of palygorskite in combination with one or more types of superplasticising additives.

2. Self-levelling, self-compacting concrete in accordance with claim no. 1, **characterised by** a content of palygorskite in an amount of 2 - 12% of the binder.

3. Self-levelling, self-compacting concrete in accordance with claim no. 1 **characterised by** the content of superplasticising additive in dry of dissolved form, e.g. sulphonated melaminformaldehyde, sulphonated naphthalene or additives of type Glenium in an amount of 2 - 15 kg/m$^3$ depending on effect of such additives (amounts given for saturated solutions) with a dosage to obtain a slump exceeding 150 mm before addition of palygorskite.

4. Self-levelling, self-compacting concrete in accordance with claim no. 1 **characterised by** a binder content of 300 - 450 kg binder per m$^3$ and 0 - 10% microsilica.

5. Self-levelling, self-compacting concrete in accordance with claim no. 1 **characterised by** the use of porous aggregate.

6. The use of micro-stabilised concrete in accordance with claims nos. 1 - 5 for concrete structures.

7. Procedure for production of a self-levelling, self-compacting concrete based on Portland cement and/or other binders such as pozzolans and aggregate. The composition is **characterised by** the addition of one or more superplasticisers in combination with an addition of palygorskite.

8. Procedure for production of self-levelling, self-compacting concrete in accordance with claim no. 7 **characterised by** the addition of an amount of superplasticiser as claimed in claim no. 3 and addition of palygorskite in an amount of 2 - 12% of the binder.

9. Application of self-levelling, self-compacting concrete in accordance with claim nos. 7 and 8 for construction of concrete structures.

10. Application of self-levelling, self-compacting concrete in accordance with claim nos. 1-5 or a self-levelling, self-compacting concrete produced in accordance with claim nos. 7 and 8 and using a porous aggregate; Placed in the structures by pumping.

## Patentansprüche

1. Selbst-nivellierender, selbst-verdichtender Beton, hergestellt auf der Basis von Portland Zement und/oder anderen hydraulischen Bindern, wie Pozzolanen, mit dem Zusatz von Wasser und Zuschlagstoff, **gekennzeichnet durch** einen Gehalt an Palygorskit in Kombination mit einem oder mehreren Arten superplastifizierender Additive.

**2.** Selbst-nivellierender, selbst-verdichtender Beton gemäß Anspruch 1, **gekennzeichnet durch** einen Anteil an Palygorskit in einer Menge von 2-12 % des Binders.

**3.** Selbst-nivellierender, selbst-verdichtender Beton gemäß Anspruch 1, **gekennzeichnet durch** einen Anteil eines oder mehrerer superplastifizierender Additive in trockener oder gelöster Form, beispielsweise geschwefeltem Melaminformaldehyd, geschwefeltem Naphthalin oder Additiven vom Typ Glenium in einer Menge von 2-15 kg/m$^3$ in Abhängigkeit vom Einfluss derartiger Additive (Beträge für gesättigte Lösungen) mit einer Dosierung, um eine Setzung von mehr als 150 mm vor Zugabe von Palygorskit zu erhalten.

**4.** Selbst-nivellierender, selbst-verdichtender Beton gemäß Anspruch 1, **gekennzeichnet durch** einen Bindergehalt von 300-450 kg Binder pro m$^3$ und 0-10 % Mikrokieselerde.

**5.** Selbst-nivellierender, selbst-verdichtender Beton gemäß Anspruch 1, **gekennzeichnet durch** die Verwendung eines porösen Zuschlagstoffes.

**6.** Verwendung von mikrostabilisiertem Beton gemäß den Ansprüchen 1 bis 5 für Betonteile.

**7.** Verfahren zur Herstellung eines selbst-nivellierenden, selbst-verdichtenden Betons, basierend auf Portland-Zement und/oder anderen Bindern, beispielsweise Pozzolanen und Zuschlagstoffen. Die Zusammensetzung ist durch den Zusatz eines oder mehrerer Superplastifizierer in Kombination mit der Zugabe von Palygorskit **gekennzeichnet**.

**8.** Verfahren zur Herstellung eines selbst-nivellierenden, selbst-verdichtenden Betons gemäß dem Anspruch 7, **gekennzeichnet durch** die Zugabe eines Anteils an Superplastifizierern, wie im Anspruch 3 beansprucht, und **durch** die Zugabe von Palygorskit in einer Menge von 2-12 % des Binders.

**9.** Anwendung eines selbst-nivellierenden, selbst-verdichtenden Betons gemäß den Ansprüchen 7 und 8 für die Herstellung von Betonteilen.

**10.** Anwendung eines selbst-nivellierenden, selbst-verdichtenden Betons gemäß den Ansprüchen 1 bis 5, oder eines selbst-nivellierenden, selbst-verdichtenden Betons, hergestellt nach den Ansprüchen 7 und 8 und unter Verwendung eines porösen Zuschlagstoffes, wobei dieser durch Pumpen in die Form bzw. Bauteile gebracht wird.

**Revendications**

**1.** Béton auto-nivellant, auto-compactant produit à base de ciment portland et/ou d'autres liants hydrauliques comme des pouzzolanes avec addition d'eau et d'agrégats **caractérisé par** un taux de palygorskite en combinaison avec un ou plusieurs types d'additifs superplastifiants.

**2.** Béton auto-nivellant, auto-compactant selon la revendication 1, **caractérisé par** un taux de palygorskite dans une quantité de 2-12% du liant.

**3.** Béton auto-nivellant, auto-compactant selon la revendication 1, **caractérisé par** le taux d'additif superplastifiant sous la forme sèche de la forme dissoute, par exemple mélamineformaldéhyde sulfoné, naphtalène sulfoné ou des additifs de type Glenium dans une quantité de 2-15 kg/m$^3$ en fonction de l'effet de ces additifs (quantités données pour des solutions saturées) avec un dosage pour obtenir une hauteur d'affaissement dépassant 150 mm avant addition de palygorskite.

**4.** Béton auto-nivellant, auto-compactant selon la revendication 1 **caractérisé par** un taux de liant de 300-450 kg de liant par m$^3$ et 0-10% de microsilice.

**5.** Béton auto-nivellant, auto-compactant selon la revendication 1 **caractérisé par** l'utilisation d'agrégat poreux.

**6.** Utilisation de béton micro-stabilisé selon les revendications 1-5 pour des structures de béton.

**7.** Procédure de production de béton auto-nivellant, auto-compactant à base de ciment portland et/ou d'autres liants comme des pouzzolanes et des agrégats. La composition est **caractérisée par** l'addition d'un ou plusieurs superplastifiants en combinaison avec une addition de palygorskite.

8. Procédure de production de béton auto-nivellant, auto-compactant selon la revendication 7 **caractérisée par** l'addition d'une quantité de superplastifiant selon la revendication 3 et l'addition de palygorskite dans une quantité de 2-12% du liant.

9. Application de béton auto-nivellant, auto-compactant selon les revendications 7 et 8 pour la construction de structures en béton.

10. Application de béton auto-nivellant, auto-compactant selon les revendications 1-5 ou d'un béton auto-nivellant, auto-compactant produit selon les revendications 7 et 8 et en utilisant un agrégat poreux; placé dans les structures par pompage.